(19) Europäisches Patentamt

European Patent Office

Office européen des brevets

(11) Veröffentlichungsnummer : **0 445 902 A1**

(12) # EUROPÄISCHE PATENTANMELDUNG

(21) Anmeldenummer : **91250058.4**

(22) Anmeldetag : **06.03.91**

(51) Int. Cl.⁵ : **F16L 59/14, F16L 59/18**

(30) Priorität : **09.03.90 DE 4008019**
**31.01.91 DE 9101169 U**

(43) Veröffentlichungstag der Anmeldung :
**11.09.91 Patentblatt 91/37**

(84) Benannte Vertragsstaaten :
**AT DE DK GB NL**

(71) Anmelder : **MANNESMANN**
**Aktiengesellschaft**
**Mannesmannufer 2**
**W-4000 Düsseldorf 1 (DE)**

(72) Erfinder : **Stamm, Friedel, Dipl.-Ing.**
**Schlickumer Weg 7**
**W-4006 Erkrath (DE)**
Erfinder : **Kraan, J. M. Benedictus**
**Mozartlaan 12**
**NL-1817 GS Alkmaar (NL)**

(74) Vertreter : **Meissner, Peter E., Dipl.-Ing. et al**
**Patentanwaltsbüro Meissner & Meissner,**
**Herbertstrasse 22**
**W-1000 Berlin 33 (DE)**

(54) **Wärmeisoliertes Leitungsrohr.**

(57)    Die Erfindung betrifft ein wärmeisoliertes Leitungsrohr mit einem Innenrohr (2), das an den Enden je einen als Zapfen (6) oder als Muffenelement (5) ausgebildeten Verbinder aufweist und über seine Länge mit einer auf der Außenseite angeordneten Wärmeisolierung (7) versehen ist, die von einem mit den Verbindern fest verbundenen Außenrohr (8) umfaßt und durch in ungleichmäßigen Abständen über die verteilt angeordneten Zentrierringen (9) durchsetzt wird. Um ein verbessertes wärmeisoliertes Leitungsrohr anzugeben, mit dem bisher bekannte Nachteile vermieden werden, wird vorgeschlagen, daß das Innenrohr mit den Verbindern mittels einer Schweißnaht (3) verbunden ist.

EP 0 445 902 A1

# WÄRMEISOLIERTES LEITUNGSROHR

Die Erfindung betrifft ein wärmeisoliertes Leitungsrohr gemäß dem Gattungsbegriff des Hauptanspruches.

Zur Steigerung der Ausbeute bereits erschlossener Ölfelder werden unterschiedliche Verfahren zur Erhöhung der Fließfähigkeit des am Gestein anhaftenden Öles angewandt, zum Beispiel auch die Dampfinjektion. Dazu wird über ein Gestänge aus miteinander verschraubten Leitungsrohren bzw. Steigrohren hochgespannter Dampf in das Erdreich gepreßt. Damit der Dampf auf dem Weg von der über Tage angeordneten Erzeugungsstelle bis zur Austrittsstelle im Bohrloch nicht kondensiert, ist es bekannt (DE-PS 33 18 045), dafür wärmeisolierte Leitungsrohre zu verwenden. Diese weisen ein als Gewinderohr ausgebildetes Innenrohr auf, das an seinen Enden mit aufgeschraubten Verbindern verbunden ist. Die Verbinder sind mechanisch bearbeitete dickwandige Hohlkörper, die an den Enden je einen Gewindeabschnitt aufweisen, wobei der mit dem Innenrohr zu verschraubende Gewindeabschnitt als Muffenelement und der mit dem nächsten isolierten Leitungsrohr zu verbindende Gewindeabschnitt wahlweise als Zapfen- oder als Muffenelement ausgebildet ist. Auf der Außenseite des Innenrohres ist über die gesamte Länge eine Wärmeisolierung angeordnet, die von einem mit den Verbindern fest verbundenen Außenrohr umfaßt und durch in ungleichmäßige Abstände über die Länge verteilt angeordnete Zentrierringe durchsetzt wird.

Nachteilig bei dieser Konstruktion ist, daß die Herstellung der je zwei Gewindeabschnitte aufweisenden Verbinder teuer ist und beim Nachschneiden des Gewindes am Innenrohr das Außenrohr in der Länge angepaßt werden muß.

Aufgabe der Erfindung ist es, ein verbessertes wärmeisoliertes Leitungsrohr anzugeben, mit dem die geschilderten Nachteile vermieden werden.

Diese Aufgabe wird mit den im kennzeichnenden Teil des Hauptanspruches angegebenen Merkmalen gelöst.

Der erfindungsgemäße Vorschlag beruht darauf, den Verbinder konstruktiv so zu gestalten, daß er auf dem nach innen liegenden Ende einen gewindefreien Abschnitt aufweist, der über eine Schweißnaht mit dem Innenrohr verbunden werden kann. Die Art der Schweißverbindung kann verschieden sein, vorzugsweise wird eine Reibschweißung vorgeschlagen.

Der Vorteil der erfindungsgemäßen Konstruktion ist darin zu sehen, daß zum einen die Herstellung der Innenrohre vereinfacht wird, da sie nur noch als glattendige Rohre hergestellt zu werden brauchen und das Schneiden der Gewinde an den Enden entfällt. Ebenso entfallen die dem Innenrohr zugewandten Gewindeabschnitte der Verbinder, so daß insgesamt pro wärmeisoliertes Leitungsrohr die Anfertigung von vier Gewindeabschnitten überflüssig wird. Ein weiterer Vorteil ist darin zu sehen, daß durch das einfache Abstechen der Enden des Innenrohres genaue Längen hergestellt werden können, die unter Berücksichtigung des Zuschlages für die Reibschweißung eine Endlänge in einem eng begrenzten Toleranzbereich ergeben. Damit ist es möglich, die Außenrohre ebenfalls in einer definierten Länge herzustellen, so daß die erforderlichen Anpassungen im Fall eines Nachschneidens des Gewindes entfallen.

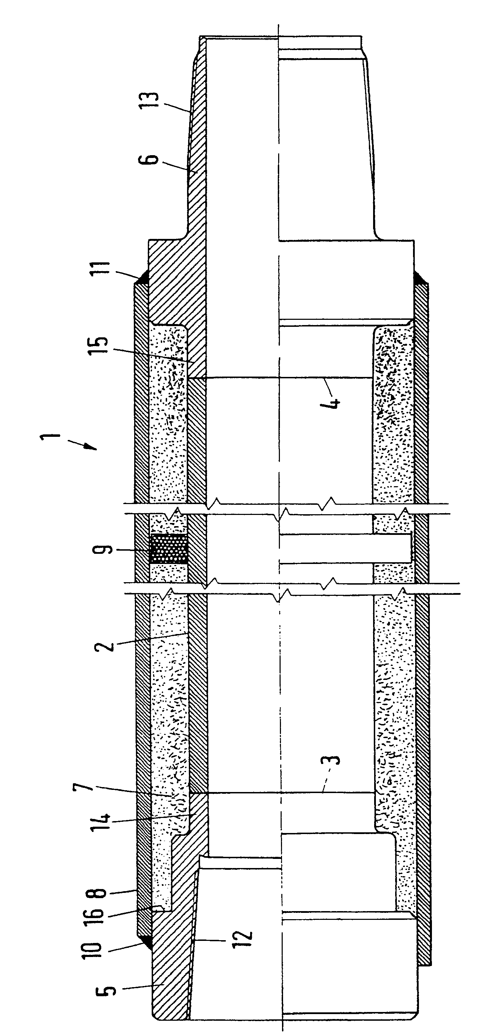

In der einzigen Zeichnung ist in einem Längsschnitt das erfindungsgemäße wärmeisolierte Leitungsrohr 1 dargestellt. Dabei zeigt die untere Hälfte den nicht vorgespannten Zustand und die obere Hälfte den vorgespannten Zustand. Das wärmeisolierte Leitungsrohr 1 besteht aus einem glattendigen Innenrohr 2, das an den Enden über eine Reibschweißnaht 3,4 mit den Verbindern 5,6 verbunden ist. Zur Herstellung der Verbindung weisen die Verbinder 5,6 auf dem nach innen liegenden Ende einen gewindefreien Abschnitt 14,15 auf. Auf der Außenseite des Innenrohres 2 ist eine Wärmeisolierung 7 angeordnet, die durch ein Außenrohr 8 völlig umschlossen wird. Damit die Wärmeisolierung 7 in dem Zwischenraum zwischen Innen 2- und Außenrohr 8 einen gewissen Halt hat, sind in unregelmäßigen Abständen über die Länge verteilt geteilte Zentrierringe 9 (hier nur einer dargestellt) angeordnet. Das Außenrohr 8 ist über eine Schweißnaht 10,11 fest mit den Verbindern 5,6 verbunden. Die Verbinder 5,6 weisen auf dem dem Innenrohr 2 abgewandten Ende einen Gewindeabschnitt 12,13 auf, der einmal als Muffenelement 12 und einmal als Zapfenelement 13 ausgebildet ist. Bei Verschraubung mit einem weiteren Leitungsrohr wird dieser Verbindungstyp als Integralverbindung bezeichnet. Um das wärmeisolierte Leitungsrohr 1 in seinen äußeren Maßen noch weiter zu begrenzen und schlanker zu machen, kann man die Stufe 16 im äußeren Durchmesserbereich des als Muffenteil ausgebildeten Verbinders 5 weglassen. Dementsprechend würde der verdickte Teil des als Zapfenteil ausgebildeten Verbinders 6 ebenfalls reduziert werden.

Nachfolgend werden die einzelnen Arbeitsschritte aufgeführt, die für die Herstellung eines solchen erfindungsgemäßen Leitungsrohres 1 erforderlich sind. Das nach einem üblichen Walzverfahren hergestellte warmgefertigte Innenrohr 2 wird an den Enden glattendig abgestochen und der Reibschweißanlage zugeführt. Parallel dazu werden aus dickwandigen Rohrstücken über eine mechanische Bearbeitung die beiden Verbinder 5,6 hergestellt. In der Reibschweißanlage erfolgt die Verbindung der Verbinder 5,6 mit dem glattendigen Innenrohr 2. Die bei der Reibschweißung entstehenden Schweißbärte werden durch eine mechanische Innen- und Außenbearbeitung beseitigt. Danach wird auf der Außenseite des Innenrohres 2 die Wärmeisolierung 7 aufgebracht und das separat hergestellte Außenrohr 8 über die Wärmeisolierung 7 geschoben. Wie auf der unteren Hälfte der Zeichnung zu erkennen ist, wird zunächst nur eine Seite des Außenrohres 8 über eine Schweißnaht 11 mit einem der Verbinder 6 verbunden. Danach wird ein heißes Fluid, normalerweise Dampf, durch das Leitungsrohr geleitet, so daß das gesamte Rohr sich entsprechend ausdehnen kann. In diesem Zustand erfolgt die Verbindung des anderen Endes des Außenrohres 8 mit dem anderen Verbinder 5, ebenfalls mittels einer Schweißnaht 10. Nach dem Abkühlen des Leitungsrohres 1 ergeben sich auf der Innenseite Zug- und auf der Außenseite Druckspannungen. Dieses Vorspannungsverfahren hat den Zweck, daß die Leitungsrohre nach dem Einbau und dem Beaufschlagen mit einer erhöhten Temperatur infolge des Dampfdurchtrittes mehr oder weniger spannungslos werden. Um beim Festschweißen der anderen Seite des Außenrohres 8 eine Beeinträchtigung des Gewindeabschnittes 12 des Verbinders 5 weitgehend zu vermeiden, ist es bekannt, während des Schweißvorganges einen wasserdurchflossenen Kühlkörper z. B. aus Kupfer in den Verbinder 5 einzuschrauben. Damit soll verhindert werden, daß durch die hohen Schweißtemperaturen der Gewindeabschnitt verzundert.

Die Wärmeisolierung kann noch verbessert werden, wenn man den beim Zusammenschrauben zweier wärmeisolierter Leitungsrohre 1 sich ergebenden Zwischenraum auf der Außenseite der miteinander verschraubten Verbinder 5,6 ebenfalls mit einer Isolierung versieht.

**Patentansprüche**

1. Wärmeisoliertes Leitungsrohr mit einem Innenrohr, das an den Enden mit je einem als Zapfen- oder als Muffenelement ausgebildeten Verbinder verbunden und über seine Länge mit einer auf der Außenseite angeordneten Wärmeisolierung versehen ist, die von einem mit den Verbindern fest verbundenen Außenrohr umfaßt und durch in ungleichmäßigen Abständen über die Länge verteilt angeordneten Zentrierringen durchsetzt wird, **dadurch gekennzeichnet,** daß die Verbinder (5,6) auf dem nach innen liegenden Ende einen gewindefreien Abschnitt (14,15) aufweisen, der mit dem Innenrohr (2) mittels einer Schweißnaht (3,4) verbunden ist.

2. Wärmeisoliertes Leitungsrohr nach Anspruch 1, **dadurch gekennzeichnet,** daß die Schweißverbindung (3,4) eine Reibschweißung ist.

3. Wärmeisoliertes Leitungsrohr nach den Ansprüchen 1 und 2, **dadurch gekennzeichnet,** daß der beim Zusammenschrauben zweier wärmeisolierter Leitungsrohre (1) sich ergebende Zwischenraum auf der Außenseite der Verbinder (5,6) ebenfalls eine Isolierung aufweist.

EP 0 445 902 A1

**Europäisches Patentamt**

## EUROPÄISCHER RECHERCHENBERICHT

Nummer der Anmeldung

EP 91 25 0058

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-C-3318045 (BEB)<br>* das ganze Dokument *<br>--- | 1, 2 | F16L59/14<br>F16L59/18 |
| Y | EP-A-190092 (MANNESMANN AG)<br>* Seite 3, Zeilen 13 - 26 *<br>--- | 1, 2 | |
| A | DE-A-3215201 (GENERAL ELECTRIC CO.)<br>* Seite 17, letzter Absatz - Seite 18, Absatz 1; Figur 3 *<br>--- | 3 | |
| A | US-A-3574357 (GRUPUL INDUSTRIAL PENTRU FORAY SI)<br>* Spalte 2, Zeilen 35 - 43; Figur 1 *<br>----- | 3 | |

**RECHERCHIERTE SACHGEBIETE (Int. Cl.5)**

F16L

Der vorliegende Recherchenbericht wurde für alle Patentansprüche erstellt

| Recherchenort | Abschlußdatum der Recherche | Prüfer |
|---|---|---|
| DEN HAAG | 20 JUNI 1991 | RAMPELMANN K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument